# EUROPEAN PATENT SPECIFICATION

(11) **EP 1 215 473 B1**
(45) Date of publication and mention of the grant of the patent: **21.02.2007**
(21) Application number: 01310335.3
(22) Date of filing: 11.12.2001
(51) Int. Cl.: G01K 1/14, F23Q 9/04

(54) **Universal thermocouple**
Universales Thermoelement
Thermocouple universel

(30) Priority: 15.12.2000 GB 0030550
(43) Date of publication of application: 19.06.2002
(73) Proprietor: Orkli (UK) Limited, Chessington, Surrey KT9 1EU (GB)
(72) Inventor: Wiltshire, Peter, Chessington, Surrey KT9 1EU (GB)
(74) Representative: Pedder, James Cuthbert

(56) References cited:
- GB-A- 2 088 185
- US-A- 3 290 178
- US-A- 3 709 740
- US-A- 3 930 891
- US-A- 4 177 034

## Description

This invention relates to a universal thermocouple.

In the field of gas appliances, particularly gas boilers and gas fires, a pilot burner which is permanently ignited, is used to ignite the main burner when it is required to use the appliance. However, should the pilot burner go out, supplying gas to the main burner could be highly dangerous. The operation of the appliance is controlled by a thermocouple which detects when the pilot light has become extinguished and not only causes the main gas valve to the main gas burner to be turned off but also cuts the gas supply to the pilot burner so that no gas escapes.

Thermocouples sometimes fail and need to be replaced. Unfortunately for repairers, each manufacturer has its own unique thermocouples and therefore, if the repairer is to be fully equipped to repair all types of gas appliance, he or she has to carry around a large number of different thermocouples in his repair vehicle, thus, not only increasing the repairer's overhead but also taking up room in the vehicle which could be used for stocking other needed parts. Alternatively, there are a number of so called "universal thermocouples" on the market but these require considerable skill on the part of the repairer in order to ensure that the thermocouple is correctly located in relation to the pilot burner. Such "universal thermocouple" are shown in US-A-3 290 178 and US-A-3 709 740.

The present invention seeks to provide a thermocouple which is usable in most if not all installations, does not require significant skill on the part of the installer and does not require the room which would be needed to stock a complete range of thermocouples.

According to the invention, there is provided a universal thermocouple comprising a thermocouple element having a threaded portion and a plurality of adaptors for the thermocouple element, each for a different design of thermocouple fitment, the adaptors each having a central bore with an internal threaded portion, each adaptor being positioned on the thermocouple element with the thermocouple element passing through the central bore of the adaptor and the threaded portion of the adaptor cooperating with the threaded portion of the thermocouple element to locate the adaptor in a predetermined position on the thermocouple element when the adaptor is fully screwed home on the thermocouple element, the threaded portion of the adaptor being located in a predetermined position in which the adaptor is unequivocally located at a predetermined position from the tip of the thermocouple element so that the tip of the thermocouple element is always located in the correct position in relation to the thermocouple fitment for which the particular adaptor is intended.

The screw thread may be left handed.

Each adaptor may have a location surface engageable with a co-operating surface of the pilot burner of an appliance and the location surface may be located on the adaptor in relation to its screw which is determined by the desired position of the tip of the thermocouple element determined by the parameters of the appliance in which it is to be fitted.

The thermocouple element may have a head at the opposite end to its tip, connected thereto by a stem for insertion into the main gas valve of the appliance to which it is to be fitted,

The stem may have a flat portion between the head and the connection area and a slotted nut is provided, co-operating with the flat portion to enable the nut to be inserted onto the stem, the nut being intended to be used to secure the head in the main gas valve.

The flat portion of the stem may be located in the region of but spaced from the head.

The adaptor may be cylindrical and may have an annular flange therearound, one axially directed surface of the flange being directed towards the tip of the thermocouple element and constituting the locating surface.

A fixing nut may be provided for securing the adaptor in position in the pilot burner.

A plurality of nuts may be provided, each nut being associated with one or more adaptors.

The invention will now be described in greater detail, by way of example, with reference to the drawings, in which:-
Figure 1 is a diagrammatic view of a typical gas appliance burner system in which the invention is used;
Figure 2 shows the pilot burner arrangement in greater detail;
Figure 3 is a side view of a thermocouple element forming part of the invention;
Figure 4 shows in sectional view one form of typical adaptor for use with the thermocouple element of figure 3.
Figure 5 shows a sectional view of the adaptor of figure 4 assembled on the thermocouple element of figure 3 together with a fixing nut enabling the thermocouple to be connected to the appliance.
Figure 6 shows in sectional view a second form of typical adaptor for use with the thermocouple element of figure 3, and
Figure 7 is a view similar to figure 5 but with the second adaptor assembled thereto.

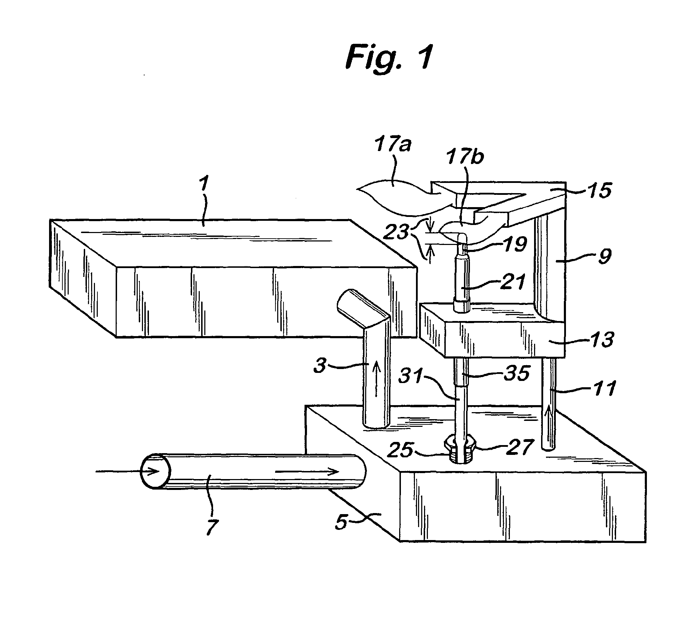

Referring firstly to figure 1, there is shown, in diagrammatic form, a typical burner installation. Thus the installation comprises a main burner 1 which is connected by a suitable conduit 3 to the main gas valve 5 which in turn is connected to the main gas supply 7. Also connected to the main gas valve 5 is the pilot burner assembly 9 via conduit 11.

The pilot burner assembly 9 comprises a mounting block 13 which carries a split pilot burner 15 such that the burner flame is split into two parts 17a and 17b. The pilot burner part 17a is used to ignite the main burner 1 and the pilot burner part 17b is used to heat up the tip 19 of the thermocouple 21. As can be seen from the drawing, the tip 19 of the thermocouple 21 must lie within the flame part 17b. Usually the amount of the thermocouple tip 19 residing in the flame part 17b is 12mm. This part of the tip 19 is indicated by the measurement arrows 23. The other end of the thermocouple 21 enters an aperture 25 in the main gas valve 5 and is secured therein by a suitable nut 27. The particular form of nut shown here forms part of the invention. The main gas valve 5 is in two parts, one of which controls the gas supply to the main burner 1 and the other of which controls the gas supply to the pilot burner. Both of these valve parts are controlled by the thermocouple 21 but the valve part controlling the pilot burner 9 can be manually operated against a spring return to allow the pilot burner to be lit.

The operation of the appliance is as follows:

Gas is supplied from the gas main 7 to the main gas valve 5. In order to light the pilot burner 9, the main gas valve part controlling the supply to the pilot burner is manually opened by means of a press button or the like (not shown) and the burner 9 is ignited, usually by a suitable piezo-electric igniter (also not shown here). Both of the flame parts 17a and b will be ignited. The flame part 17b will then start to heat the tip 19 of the thermocouple 21. Heating of the thermocouple to operating temperature will take a little time and during this time, about 30 seconds being allowed for this purpose, the press button is held down.

Once the thermocouple 21 has reached operating temperature, it will generate enough electricity to control the operation of both parts of the main gas valve 5, maintaining the part controlling the pilot burner permanently open and permitting the other valve part to be opened to operate the main burner as required.

Should the flame 17 of the pilot burner 9 go out, the thermocouple will rapidly cool and stop generating sufficient electricity to keep the valve parts of the main gas valve 5 open. thus the gas supply to the appliance will automatically be shut off.

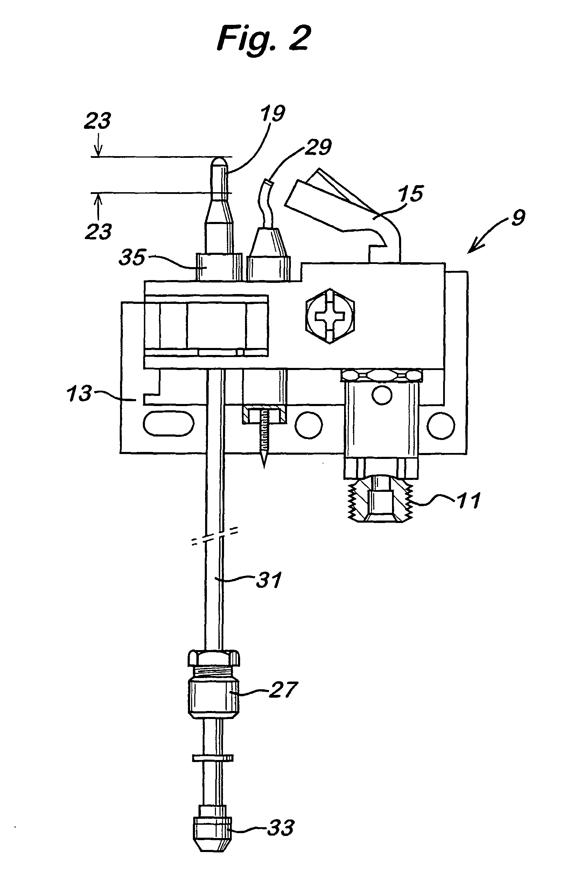

Figure 2 shows the pilot burner 9 in greater detail and incidentally shows the igniter 29.

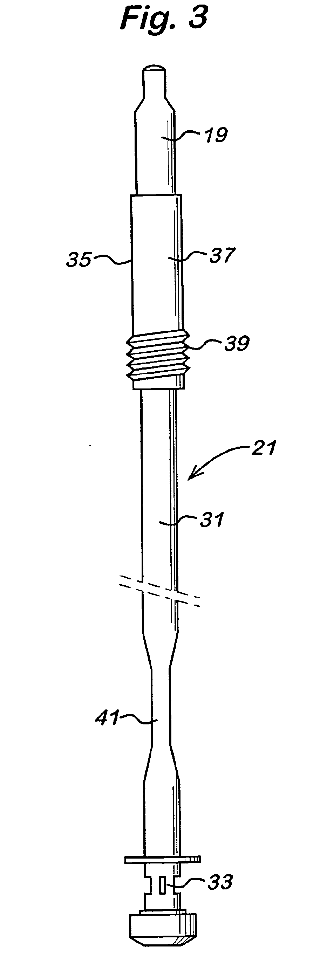

Figure 3 shows a thermocouple in accordance with the invention without the necessary adaptors needed to install it in the pilot burner 9. Typical forms of adaptor are shown hereafter.

The thermocouple 21 is of generally standard design and comprises a tip 19 to which is connected an tube 31 carrying the usual wiring and a head end 33 which fits into the main gas valve 5 via the aperture 25 (Fig. 1) as previously described. Instead of the fastening usually provided for attachment of the thermocouple to the pilot burner, an adaptor connector 35 is provided. This connector comprises an increased diameter tube part 37 which ends in a threaded portion 39 by means of which the adaptor is connected and accurately located with respect to the thermocouple tip 19. The threaded portion has a left handed thread for a purpose to be described.

Also provided at the lower end of the tube 31 is a flat part 41 which enables a slotted nut 27 (Fig 1) to be fitted around the tube 31 enabling the nut 27 to be used to secure the head end 33 of the thermocouple in position in the aperture 25 of the main gas valve 5 as is best seen in figure 1.

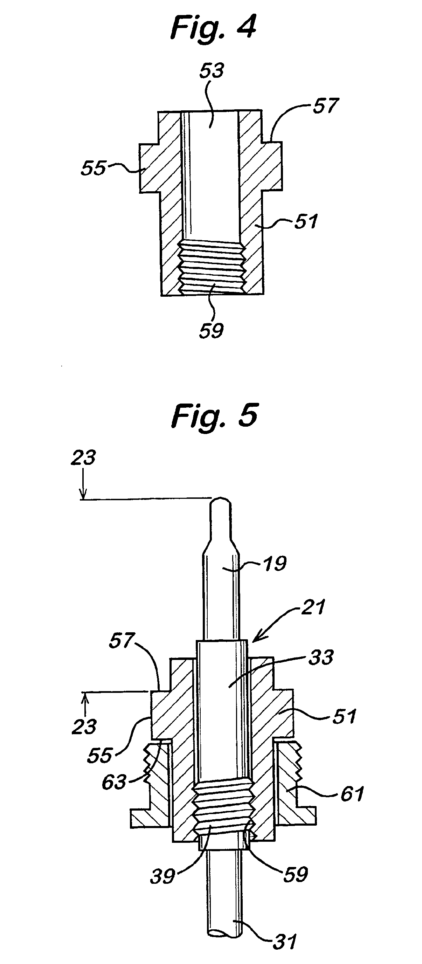

Figure 4 shows a typical adaptor which is used with the thermocouple element 21 shown in figure 3. To this end, the adaptor 51 has a through bore 53 for location on the enlarged diameter portion 37 of the thermocouple element 21 and an annular locating flange 55, the surface 57 of which provides for the actual location of the thermocouple 21. The through bore 53 has a left handed thread 59 which mates with the threaded portion 39 on the thermocouple element.

Figure 5 shows the way in which the adaptor 51 is assembled on the thermocouple element 21. It will be noted from figure 5 that the adaptor 51 is also provided with an attachment nut 61 whereby the thermocouple element is secured to the pilot burner block 13.

To assemble the adaptor 51 on the thermocouple element 21, the securing nut 61 is first slipped over the tip 19 of the thermocouple 21 and passed beyond the attachment part 35. Then the adaptor 51 itself is passed over the tip 19 of the thermocouple element 21 and slid onto the connector part 35. When it meets the screw thread 39, it is screwed fully thereon so that the adaptor 51 is accurately positioned with respect to the tip 19. As can be seen, the crucial distance is the distance between the surface 57 of the adaptor and the end of the tip 19. Once this operation has been completed, the nut 61 is offered up around the lower part of the adaptor 51 so as to engage against the lower surface 63 of the flange 55.

The thermocouple can then be offered up into the pilot burner block 13 and secured therein by means of the nut 61 which screws into a threaded aperture (not shown) therein. Because the adaptor 51 is screwed onto the connecting portion 35 of the thermocouple element 21 with a left hand thread and the nut 61 has a right hand thread, any twisting of the thermocouple while the nut 61 is being screwed up will cause, if anything, tightening of the adaptor 51 onto the thermocouple element 21. In any event, such twisting of the thermocouple element cannot cause disconnection or relative axial movement of the adaptor 51 with respect to the thermocouple element 21 and thus accurate location of the adaptor on the thermocouple element is maintained at all times. Thus the critical distance between the surface 57 of the adaptor 51 is maintained and the tip 19 of the thermocouple element and accurate location of the thermocouple tip 19 in respect of the pilot burner flame 17b is ensured at all times.

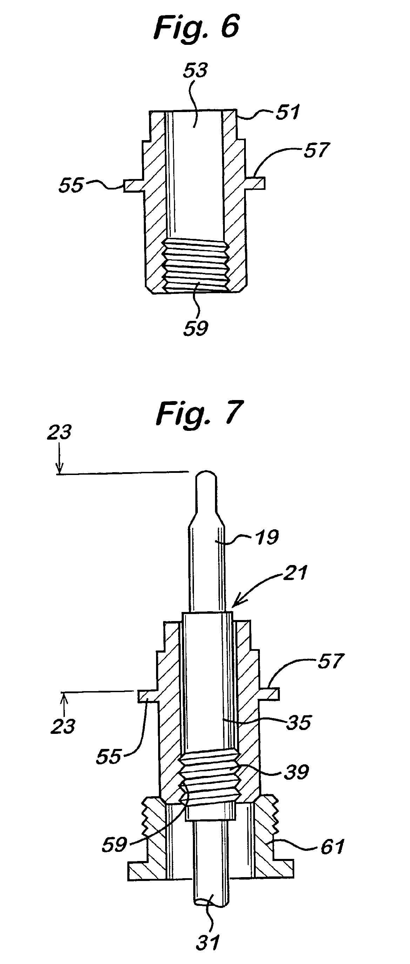

It will be appreciated that a separate adaptor will be needed to enable the tip 19 of the thermocouple element 21 to be accurately located in different makes of pilot burner. While it is neither feasible or desirable to show all possible adaptors, another typical adaptor is shown in figure 6 and its connection to the thermocouple element 21 is shown in figure 7.

Referring to these figures, the adaptor 51 here has a different external shape but has the through bore 53 and the screw thread 59. The flange 55 is shorter and the locating surface 57 is in a different axial relationship to the thread 59. However, the critical distance indicated by the arrows 23 is set for the particular appliance in which the thermocouple is to be used. Also, in this case, the nut 61 is located against the end of the adaptor 51 instead of around it.

It will of course be appreciated that modifications of or additions to the above described embodiment without departing from the scope of the invention, for example, the connecting means could define the position of the adaptor by the use of a flange surrounding the connecting part, the adaptor being then locked in place by a nut.

It will also be understood that the individual adaptors will vary in dependence on the design of the appliance being used.

## Claims

1. A universal thermocouple comprising a thermocouple element (21) having a threaded portion (39) and a plurality of adaptors (51) for the thermocouple element (21), each for a different design of thermocouple fitment, the adaptors (51) each having a central bore (53) with an internal threaded portion (59), each adaptor (51) being positioned on the thermocouple element (21) with the thermocouple element (21) passing through the central bore (53) of the adaptor (51) and the threaded portion (59) of the adaptor (51) cooperating with the threaded portion (39) of the thermocouple element (21) to locate the adaptor (51) in a predetermined position on the thermocouple element (21) when the adaptor (51) is fully screwed home on the thermocouple element (21), the threaded portion (59) of the adaptor (51) being located in a predetermined position in which the adaptor (51) is unequivocally located at a predetermined position from the tip (19) of the thermocouple element (21) so that the tip (19) of the thermocouple element (21) is always located in the correct position in relation to the thermocouple fitment for which the particular adaptor (51) is intended.

2. A thermocouple as claimed in claim 1, **characterised in that** the screw thread (39) is left handed.

3. A thermocouple as claimed in claim 1 or 2, **characterised in that** each adaptor (51) has a location surface (57) engageable with a co-operating surface of the pilot burner of an appliance.

4. A thermocouple as claimed in claim 3, **characterised in that** the location surface (57) is located on the adaptor (51) in relation to its screw (59) which is determined by the desired position of the tip (19) of the thermocouple element (21) determined by the parameters of the appliance in which it is to be fitted.

5. A thermocouple as claimed in any preceding claim, **characterised in that**, the thermocouple element (21) has a head (33) at the opposite end to its tip (19), connected thereto by a stem (31) for insertion into the main gas valve (5) of the appliance to which it is to be fitted.

6. A thermocouple as claimed in claim 5, **characterised in that** the stem (31) has a flat portion (41) between the head (33) and the connection area and a slotted nut is provided, co-operating with the flat portion (41) to enable the nut to be inserted onto the stem (31), the nut being intended to be used to secure the head (33) in the main gas valve (5).

7. A thermocouple as claimed in claim 6, **characterised in that** the flat portion (41) of the stem (31) is located in the region of but spaced from the head (33).

8. A thermocouple as claimed in claim 3 and any claim appendent thereto, **characterised in that** the adaptor (51) is cylindrical and has an annular flange (55) therearound, one axially directed surface (57) of the flange (55) being directed towards the tip (19) of the thermocouple element (21) and constituting the locating surface.

9. A thermocouple as claimed in any preceding claim, **characterised in that** a fixing nut (61) is provided for securing the adaptor (51) in position in the pilot burner.

10. A thermocouple as claimed in claim 9, **characterised in that** a plurality of nuts (61) are provided, each nut (61) being associated with one or more adaptors (51).

## Patentansprüche

1. Universales Thermoelement, umfassend ein Thermoelement-Bauteil (21) mit einem Gewindebereich (39) und einer Vielzahl von Anschlussstücken (51) für das Thermoelement-Bauteil (21), jedes für eine unterschiedliche Ausgestaltung der Thermoelement-Einrichtung, wobei die Anschlussstücke (51) jeweils eine zentrale Bohrung (53) mit einem Innengewindebereich (59) aufweisen, wobei jedes Anschlussstück (51) auf dem Thermoelement-Bauteil (21) angeordnet ist, so dass das Thermoelement-Bauteil (21) durch die zentrale Bohrung (53) des Anschlussstückes (51) verläuft und der Gewindebereich (59) des Anschlussstückes (51) mit dem Gewindebereich (39) des Thermoelement-Bauteils (21) zusammenwirkt, um das Anschlussstück (51) an einer vorbestimmten Position auf dem Thermoelement-Bauteil (21) anzuordnen, wenn das Anschlussstück (51) vollständig auf dem Thermoelement-Bauteil (21) eingeschraubt ist, wobei der Gewindebereich (59) des Anschlussstücks (51) an einer vorbestimmten Position angeordnet ist, an welcher das Anschlussstück (51) eindeutig an einer vorbestimmten Position von der Spitze (19) des Thermoelement-Bauteils (21) liegt, so dass die Spitze (19) des Thermoelement-Bauteils (21) immer an der richtigen Position in Bezug auf die Thermoelement-Einrichtung liegt, für welche das spezielle Anschlussstück (51) gedacht ist.

2. Thermoelement nach Anspruch 1, **dadurch gekennzeichnet, dass** das Schraubengewinde (39) linksgängig ist.

3. Thermoelement nach Anspruch 1 oder 2, **dadurch gekennzeichnet, dass** jedes Anschlussstück (51) eine Anlageoberfläche (57) aufweist, die mit einer zusammenwirkenden Oberfläche des Zündbrenners einer Vorrichtung in Eingriff gelangen kann.

4. Thermoelement nach Anspruch 3, **dadurch gekennzeichnet, dass** die Anlageoberfläche (57) auf dem Anschlussstück (51) in Bezug auf dessen Schraubengewinde (59) liegt, welches durch die gewünschte Position der Spitze (19) des Thermoelement-Bauteils (21) bestimmt wird, das durch die Parameter der Vorrichtung, in welche es eingesetzt werden soll, bestimmt wird.

5. Thermoelement nach einem der vorhergehenden Ansprüche, **dadurch gekennzeichnet, dass** das Thermoelement-Bauteil (21) ein Kopfteil (33) am gegenüberliegenden Ende zu seiner Spitze (19) aufweist, das mit dieser durch einen Schaft (31) zum Einsetzen in das Haupt-Gasventil (5) der Vorrichtung, in welches es eingesetzt werden soll, verbunden ist.

6. Thermoelement nach Anspruch 5, **dadurch gekennzeichnet, dass** der Schaft (31) einen flachen Bereich (41) zwischen dem Kopfteil (33) und dem Verbindungsbereich aufweist und eine geschlitzte Schraubenmutter vorgesehen ist, die mit dem flachen Bereich (41) zusammenwirkt, um es zu ermöglichen, dass die Schraubenmutter auf dem Schaft (31) angebracht werden kann, wobei die Schraubenmutter dazu gedacht ist, verwendet zu werden, um das Kopfteil (33) in dem Haupt-Gasventil (5) zu sichern.

7. Thermoelement nach Anspruch 6, **dadurch gekennzeichnet, dass** der flache Bereich (41) des Schaftes (31) in dem Bereich des Kopfteils (33) liegt, aber von diesem beabstandet ist.

8. Thermoelement nach Anspruch 3 und jedem dazugehörigen Anspruch, **dadurch gekennzeichnet, dass** das Anschlussstück (51) zylindrisch ist und einen ringförmigen Flansch (55) darum aufweist, wobei eine axial ausgerichtete Oberfläche (57) des Flansches (55) in Richtung zur Spitze (19) des Thermoelement-Bauteils (21) gerichtet ist und die Anlageoberfläche bildet.

9. Thermoelement nach einem der vorhergehenden Ansprüche, **dadurch gekennzeichnet, dass** eine Befestigungsmutter (61) vorgesehen ist, um das Anschlussstück (51) in Position im Zündbrenner zu sichern.

10. Thermoelement nach Anspruch 9, **dadurch gekennzeichnet, dass** eine Vielzahl von Schraubenmuttern (61) vorgesehen ist, wobei jede Schraubenmutter (61) mit einem oder mehreren Anschlussstücken (51) verbunden ist.

## Revendications

1. Un thermocouple universel comprenant un élément de thermocouple (21), comprenant une partie filetée (39) et une pluralité d'adaptateurs (51) pour l'élément de thermocouple (21), chacun pour une conception différente d'élément démontable de thermocouple, les adaptateurs (51) ayant chacun un perçage (53) central comprenant une partie taraudée (59), chaque adaptateur (51) étant positionné sur l'élément de thermocouple (21), l'élément de thermocouple (21) passant à travers le passage central (53) de l'adaptateur (51) et la partie filetée (59) de l'adaptateur (51) coopérant avec la partie filetée (39) de l'élément de thermocouple (21) pour positionner l'adaptateur (51) en une position prédéterminée sur l'élément de thermocouple (21), lorsque l'adaptateur (51) est complètement vissé à demeure sur l'élément de thermocouple (21), la partie filetée (59) de l'adaptateur (51) étant placée en une position prédéterminée dans laquelle l'adaptateur (51) est placé, de façon non équivoque, en une position prédéterminée vis-à-vis du bout (19) de l'élément de thermocouple (21), de manière que le bout (19) de l'élément de thermocouple (21) soit toujours placé à la position correcte par rapport à l'élément démontable de thermocouple pour lequel l'adaptateur (51) particulier est prévu.

2. Un thermocouple tel que revendiqué à la revendication 1, **caractérisé en ce que** le filet de vis (39) est à pas à gauche.

3. Un thermocouple tel que revendiqué à la revendication 1 ou 2, **caractérisé en ce que** chaque adaptateur (51) présente une surface de positionnement (57) susceptible d'être mise en prise avec une surface coopérant du brûleur pilote d'un appareil.

4. Un thermocouple tel que revendiqué à la revendication 3, **caractérisé en ce que** la surface de positionnement (57) est placée sur l'adaptateur (51), en une relation, par rapport à sa vis (59), qui est déterminée par la position du bout (19) de l'élément de thermocouple (21) déterminée par les paramètres de l'appareil dans lequel il doit être monté.

5. Un thermocouple tel que revendiqué à l'une des revendications précédentes, **caractérisé en ce que** l'élément de thermocouple (21) comprend une tête (33) à l'extrémité opposée de son bout (19), en lui étant connectée par une tige (31) prévue pour insertion dans la soupape de gaz principale (5) de l'appareil auquel il doit être monté.

6. Un thermocouple tel que revendiqué à la revendication 5, **caractérisé en ce que** la tige (31) présente une partie plate (41) entre la tête (33) et la zone de connexion, et un écrou fendu est prévu, coopérant avec la partie plate (41) pour permettre à l'écrou d'être inséré dans la tige (31), l'écrou étant prévu pour être utilisé pour fixer la tête (33) dans la soupape de gaz principal (5).

7. Un thermocouple tel que revendiqué à la revendication 6, **caractérisé en ce que** la partie plate (41) de la tige (31) est placée dans la zone de la tête (33), mais à distance de celle-ci.

8. Un thermocouple tel que revendiqué à la revendication 3 et l'une quelconque des revendications précédentes dépendant de celle-ci, **caractérisé en ce que** l'adaptateur (51) est cylindrique et présente autour de lui une bride (55) annulaire, une surface (57), orientée axialement, de la bride (55) étant orientée vers le bout (19) de l'élément de thermocouple (21) et formant la surface de positionnement.

9. Un thermocouple tel que revendiqué à l'une des quelconques des revendications précédentes, **caractérisé en ce qu'**un écrou de fixation (61) est prévu pour fixer l'adaptateur (51) en position dans le brûleur pilote.

10. Un thermocouple tel que revendiqué à la revendication 9, **caractérisé en ce qu'**une pluralité d'écrous (61) sont prévus, chaque écrou (61) étant associé à un ou plusieurs adaptateurs(51).
